# EUROPÄISCHE PATENTSCHRIFT

(11) **EP 0 386 201 B1**
(45) Veröffentlichungstag und Bekanntmachung des Hinweises auf die Patenterteilung: **03.11.1993**
(21) Anmeldenummer: 89909533.5
(22) Anmeldetag: 07.09.1989
(51) Int. Cl.: F16H 3/72, F16H 37/08

(54) **STUFENLOS REGELBARER ANTRIEB**
INFINITELY VARIABLE DRIVE
ENTRAINEMENT A REGLAGE CONTINU

(30) Priorität: 12.09.1988 CH 3390/88
(43) Veröffentlichungstag der Anmeldung: 12.09.1990
(73) Patentinhaber: FREY, Heinz, CH-6005 Luzern (CH)
(72) Erfinder: FREY, Heinz, CH-6005 Luzern (CH)
(74) Vertreter: Münch, Otto
(86) Internationale Anmeldenummer: CH8900164
(87) Internationale Veröffentlichungsnummer: WO9002891

(56) Entgegenhaltungen:
- DE-A- 2 415 859
- FR-A- 2 467 332
- GB-A- 607 989
- Konstruktion, Vol. 39, No. 4, April 1987, Springer-Verlag, (Berlin, DE), G. Nitescu et al.: "Stufenlos verstellbares mechanisches Leistungsverzweigungsgetriebe für Kraftfahrzeuge", Seiten 139-145u. Zeichnung 3

## Beschreibung

Die Erfindung betrifft einen stufenlos regelbaren Antrieb, umfassend einen Antriebsmotor, ein Differentialgetriebe mit einer ersten und einer zweiten Eingangswelle und einer Abtriebswelle, ein Schneckengetriebe mit einer Schnecke und einem Schneckenrad, sowie ein drehzahlregelbares Glied, wobei der Antriebsmotor mit der ersten Eingangswelle, das Schneckenrad mit der zweiten Eingangswelle und die Schnecke mit einer Ausgangswelle des drehzahlregelbaren Gliedes verbunden ist.

Ein solcher Antrieb ist aus der DE-OS 24 15 859 bekannt. Bei diesem bekannten Antrieb treibt ein Motor über ein Winkelreduktionsgetriebe einen Käfig mit radial orientierten Kegelrädern. Die Kegelräder stehen im Eingriff mit zwei Tellerrädern. Das eine Tellerrad ist mit einer Abtriebswelle verbunden. Ein Servomotor treibt über ein Schneckenreduktionsgetriebe das andere Tellerrad. Das Schneckengetriebe ist so ausgelegt, dass es noch gerade selbsthemmend ist. Bei konstanter Drehzahl des Antriebsmotors kann die Drehzahl der Abtriebswelle durch Variation der Drehzahl des Servomotors mit relativ geringem Leistungsaufwand geregelt werden. Allerdings ist der Leistungsaufwand des Servomotors stark drehzahlabhängig und die Drehzahlregelung bis zum Stillstand oder gar in die Drehrichtungsumkehr gelingt nur mit einer starken Untersetzung im Winkelgetriebe. Die maximale Abtriebswellendrehzahl ist also wesentlich geringer als die Drehzahl des Antriebsmotors.

Dieser bekannte Antrieb eignet sich beispielsweise für Winden oder Krane, also für Anwendungsfälle, bei welchen das Abtriebsdrehmoment stets in der gleichem Richtung wirkt.

Der vorliegenden Erfindung liegt die Aufgabe zugrunde, einen Antrieb der eingangs genannten Art derart weiterzubilden, dass die Abtriebswelle in beiden Drehrichtungen sowohl angetrieben als auch abgebremst werden kann.

Diese Aufgabe wird dadurch gelöst, dass der Antrieb ein zweites Differentialgetriebe mit einer dritten und vierten Eingangswelle und einer zweiten Abtriebswelle umfasst, dass die zweite und vierte Eingangswelle derart angetrieben sind, dass bei konstanter Drehzahl der ersten und dritten Eingangswelle die Summe der Drehzahlen der zweiten und vierten Eingangswelle konstant ist, und dass die erste Abtriebswelle drehfest mit der zweiten Abtriebswelle derart gekoppelt ist, dass eines der beiden Differentialgetriebe ein Abtriebsdrehmoment auf der ersten Abtriebswelle im einen Drehsinn und das andere Differentialgetriebe im entgegengesetzten Drehsinn bei gleichbleibender Drehrichtung und gleichbleibender Richtung eines Eingangsdrehmomentes auf die erste und dritte Eingangswelle liefert.

Nachfolgend werden Ausführungsbeispiele der Erfindung anhand der Zeichnung erläutert. Darin zeigt:
Fig. 1 schematisch eine erste Ausführungsform, und
Fig. 2-4 drei weitere Ausführungsformen.

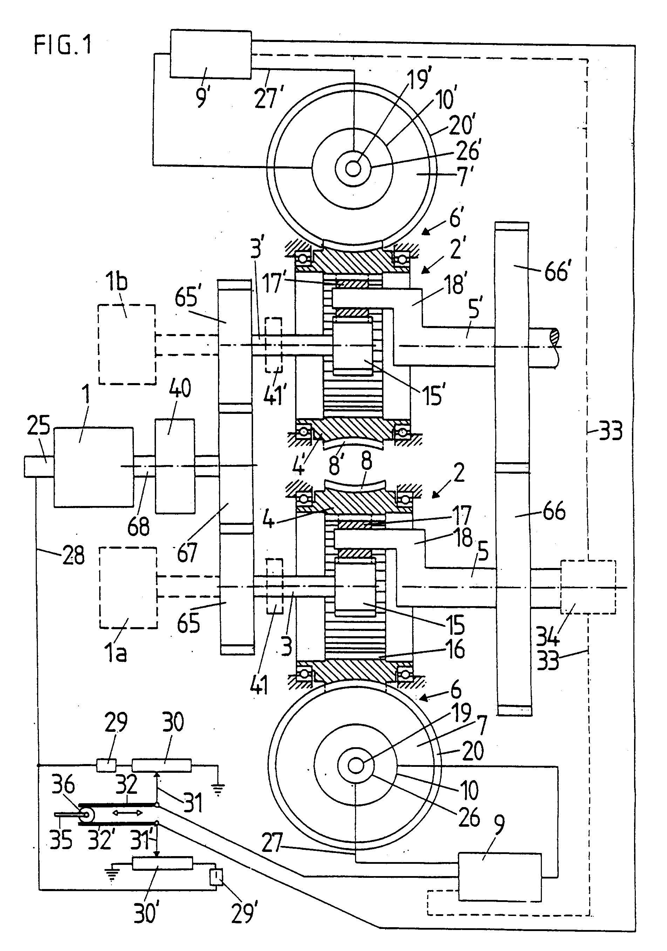

Der Antrieb nach Fig. 1 besteht aus einem Antriebsmotor 1, zwei Differentialgetrieben 2, 2' mit je zwei Eingangswellen 3, 4; 3', 4' und einer Abtriebswelle 5, 5', einem Schneckengetriebe 6, 6' mit einer Schnecke 7, 7' und einem mit der betreffenden Welle 4, 4' verbundenen Schneckenrad 8, 8' sowie einem durch einen Regler 9, 9' geregelten Servomotor 10, 10'. Die beiden Differentialgetriebe 2, 2' sind Planetengetriebe und haben ein auf der Welle 3, 3' sitzendes Sonnenrad 15, 15', einen koaxialen mit der Welle 4, 4' verbundenen Zahnkranz 16, 16' sowie über den Umfang verteilte Planetenräder 17, von denen nur je eines dargestellt ist und die mit dem betreffenden Sonnenrad 15, 15' und dem Zahnkranz 16, 16' kämmen. Die Planetenräder 17, 17' sind auf je einem Planetenträger 18, 18' drehbar gelagert. Der Planetenträger 18, 18' ist starr mit der betreffenden Welle 5, 5' verbunden. Auf den Eingangswellen 3, 3' sitzt je ein Zahnrad 65, 65'. Die beiden Zahnräder 65, 65' haben gleiche Zähnezahl und kämmen mit einem auf der Abtriebswelle 68 des Antriebsmotors 1 sitzenden Zahnrad 67. Die Eingangswellen 3, 3' werden daher durch den Motor 1 in gleicher Drehrichtung und mit gleicher Drehzahl angetrieben.

Die Schnecke 7, 7' sitzt auf der Ausgangswelle 19, 19' des betreffenden Servomotors 10, 10'. Die Zähne der Schnecken 7, 7' haben eine Steigung zwischen ca. 5° und ca. 9°, vorzugsweise etwa 7°. Der Antriebsmotor 1 hat einen Drehzahlgeber 25 und jeder Servomotor 10, 10' einen weiteren Drehzahlgeber 26, 26'. Der Ausgang 27, 27' des betreffenden Gebers 26, 26' wird auf den zugehörigen Regler 9, 9' aufgeschaltet. Der Ausgang 28 des Gebers 25 ist als Störgrösse über je einen Vorwiderstand 29, 29' an je ein Potentiometer 30, 30' angeschlossen, dessen andere Seite geerdet ist. Der zugehörige Abgriff 31, 31' des Potentiometers 30, 30' wird dem betreffenden Regler 9, 9' als Sollwert zugeführt. Im dargestellten Beispiel sind die Abgriffe 31, 31' durch je ein manuell betätigtes Glied 32, 32' einstellbar. Die Glieder 32, 32' sind über eine Rolle 36 mit einer gemeinsamen Betätigungsstange 35 verbunden. Die Rolle 36 kann gegenüber der Betätigungsstange 35 verdreht und arretiert werden. Damit können die Abgriffe 31, 31' etwas gegeneinander verschoben werden. Die beiden Potentiometer 30, 30' sind gegensinnig geschaltet, so dass beim Verstellen der Betätigungsstange 35 der eine Servomotor 10 schneller, der andere 10' dagegen langsamer läuft. Zusätzlich oder anstelle der Störgrössenaufschaltung über den Geber 25 kann den Reglern 9, 9' noch ein Signal 33 eines weiteren Gebers 34 eingegeben werden, der mit der Abtriebswelle 5 verbunden ist. Je nach Art der gewünschten Regelung kann der Geber 34 die Drehzahl oder den Drehwinkel der Abtriebswelle 5 messen.

Die Abtriebswelle 5 ist über einen Zahnradsatz 66, 66' mit der Abtriebswelle 5' drehfest verbunden. Die beiden Zahnräder 66, 66' haben gleiche Zähnezahl, so dass die Abtriebswellen 5, 5' gegenläufig drehen.

Im Betrieb dreht der Motor 1 mit einer im wesentlichen konstanten, aber ungeregelten Drehzahl. Solange die Welle 4 stillsteht, wird die Abtriebswelle 5 mit einem Untersetzungsverhältnis angetrieben, dass durch die Durchmesser des Sonnenrades 15 des Zahnkranzes 16 und der Planetenräder 17 bestimmt ist. Das Antriebsdrehmoment bewirkt ein Drehmoment auf die Welle 4 und somit das Schneckenrad 8 entgegen der Drehrichtung der Welle 3. Wird nun die Schnecke 7 in dem Sinn gedreht, dass die Welle 4 in Richtung des auf sie wirkenden Drehmomentes umläuft, so wird die Drehzahl der Abtriebswelle 5 reduziert. Da das Schneckengetriebe 6 beinahe selbsthemmend ist, wird dabei nur ein sehr geringes Drehmoment im antreibenden Sinne auf die Schnecke 7 übertragen. Der Servomotor 10 wirkt vorwiegend als Bremse. Der Regler 9 regelt die Drehzahl der Schnecke 7 über den Servomotor 10 auf den am Glied 32 eingegebenen Sollwert. Wird das Abtriebsdrehmoment an der Welle 5 erhöht, so erhöht sich unmittelbar auch das vom Motor 1 aufzubringende Drehmoment. Da dieser Motor 1 nicht geregelt ist, sinkt damit auch die Drehzahl der Welle 3. Durch den Geber 25 wird diese Aenderung erfasst und über das Potentiometer 30 und den Abgriff 31 dem Regler 9 eingegeben, so dass auch die Schnecke 7 langsamer dreht. Diele Störgrössenaufschaltung ist so ausgelegt, dass die Drehzahl der Abtriebswelle 5 unabhängig ist von der Grösse des Abtriebsdrehmomentes. Wenn der Servomotor 10 so schnell dreht, dass das Sonnenrad 15 und der Zahnkranz 16 gleiche Umfangsgeschwindigkeiten haben, so steht die Welle 5 still. Dreht der Zahnkranz 16 schneller, so läuft die Welle 5 rückwärts. Die Getriebeverhältnisse sind so ausgelegt, dass der Stillstand der Welle 5 bei der Hälfte der Maximaldrehzahl des Servomotors 10 erreicht ist. Die Welle 5 hat damit in beiden Drehrichtungen die gleiche Maximaldrehzahl.

Wenn das Abtriebsdrehmoment auf die Welle 5 im entgegengesetzten Drehsinn wirkt, so verläuft der Kraftfluss über den Zahnradsatz 67, 65', das zweite Differentialgetriebe 2' und das Zahnradpaar 66, 66' zur Abtriebswelle 5. Die beiden Differentialgetriebe 2, 2' und die beiden Schneckengetriebe 6, 6' sind identisch aufgebaut. Die Regler 9, 9' und die Potentiometer 30, 30' mit den Abgriffen 31, 31' sind so geschaltet, dass die Summe der Drehzahlen der beiden Servomotoren 10, 10' über den gesamten Verstellbereich konstant ist. Dazu sind die beiden Potentiometer 30, 30' seitenverkehrt angeschlossen, so dass die Summe der Signale an den beiden Abgriffen 31, 31' konstant bleibt. Diese Sollwertsumme kann durch Verstellen der Rolle 36 relativ zur Betätigungsstange 35 fein eingestellt werden.

Der beschriebene Antrieb ermöglicht eine stufenlose Regelung der Drehzahl der Abtriebswelle 5 in beiden Drehrichtungen sowohl bei antreibendem als auch bei bremsendem Drehmoment auf der Abtriebswelle 5. Der Antrieb eignet sich beispielsweise für Aufzüge mit Gegengewichten, für Roboter oder als Fahrzeugantrieb. Insbesondere bei der Anwendung in Aufzügen ist es zweckmässig, den Antriebsmotor 1 und mindestens einen der Servomotoren 10, 10' als Stoppmotoren auszubilden. Solche Stoppmotoren haben eine Bremse, die beim Abschalten der Stromzufuhr die Motorwelle blockiert. Beim Abschalten wird zunächst die Drehzahl der Abtriebswelle 5 auf Null reduziert und der Antriebsmotor 1 abgeschaltet, wobei die Regler 9, 9' die Servomotoren 10, 10' synchron mit dem Drehzahlabfall der Welle 68 verlangsamen, so dass die Welle 5 stehen bleibt. Beim Einschalten werden umgekehrt zuerst die Regler 9, 9' mit den Servomotoren 10, 10' in Betrieb gesetzt und hierauf der Motor 1 eingeschaltet. Durch die Störgrössenaufschaltung laufen die Servomotoren 9, 9' synchron mit der Welle 3 hoch. Um einen grossen Drehzahlbereich der Abtriebswelle 5 zu erreichen, sind die Durchmesser der Schnecken 7, 7' mindestens halb so gross, vorzugsweise mindestens so gross wie die Durchmesser der Schneckenräder 8, 8'. Dadurch wird eine für Schneckengetriebe ungewöhnlich kleine Untersetzung erreicht. Für eine gegebene Maximaldrehzahl der Servomotoren 10, 10' kann daher eine hohe Drehzahl der Wellen 4, 4' erreicht werden. Der beschriebene Antrieb hat eine sehr hohe Dynamik, weil für eine Drehzahländerung der Welle 5 nur die Drehzahl der Wellen 4, 4', der Schneckengetriebe 6, 6' und der Servomotoren 10, 10' geändert werden muss, welche relativ kleine Massenträgheitsmomente haben. Im Gegensatz zu Leistungsservomotoren kann das Beschleunigungs- und Bremsvermögen hier sogar noch verbessert werden, wenn auf die Welle 68 ein Schwungrad 40 aufgesetzt wird.

Beim beschriebenen Antrieb ist das Drehmoment an der Motorenwelle 68 proportional zum Drehmoment an der Abtriebswelle 5 unabhängig von deren Drehzahl. Das Abtriebsdrehmoment kann deshalb unmittelbar durch die Stromaufnahme des Motors 1 gemessen werden. Dies ist insbesondere bei der Anwendung in Kranen und Aufzügen und bei Robotern zur Ueberlastsicherung nützlich. Mit abnehmender Drehzahl der Abtriebswelle 5 sinkt auch der Wirkungsgrad. Beim Stillstand der Abtriebswelle 5 erreicht dieser den Wert Null. Dies ist auch so bei Leistungs-Servomotoren. Im Unterschied zu diesen wird die überschüssige Leistung nicht durch die Elektronik verheizt, sondern sie wirkt sich in einer Erwärmung des Getriebeöls aus. Die Abwärme kann aus diesem Grund einfach, betriebssicher und billig, z.B. durch einen Oelkühler abgeführt werden. Die Wärmeabfuhr bei der Leistungselektronik stellt demgegenüber ein erhebliches Problem von stufenlosen Antrieben mit Hochleistungsservomotoren dar, unter anderem auch ein Sicherheitsrisiko.

Um die Anforderungen an die exakte Synchronisierung der beiden Servomotoren 10, 10' zu reduzieren, kann in den beiden Eingangswellen 3, 3' je ein Freilauf 41, 41' eingebaut werden, was in Fig. 1 gestrichelt angedeutet ist. Alternativ dazu ist es auch möglich, die beiden Eingangswellen 3, 3' durch je einen separaten Antriebsmotor 1a, 1b anzutreiben, wobei die Zahnräder 65, 65', 67 entfallen. Die beiden Motoren 1a, 1b drehen konstant mit gleicher Drehrichtung, wobei nur einer von Ihnen belastet ist, je nach dem Drehsinn des Drehmomentes auf der Abtriebswelle 5. Statt der Servomotoren 10 können auch elektrisch, mechanisch, pneumatisch oder hydraulisch regelbare Bremsen eingesetzt werden.

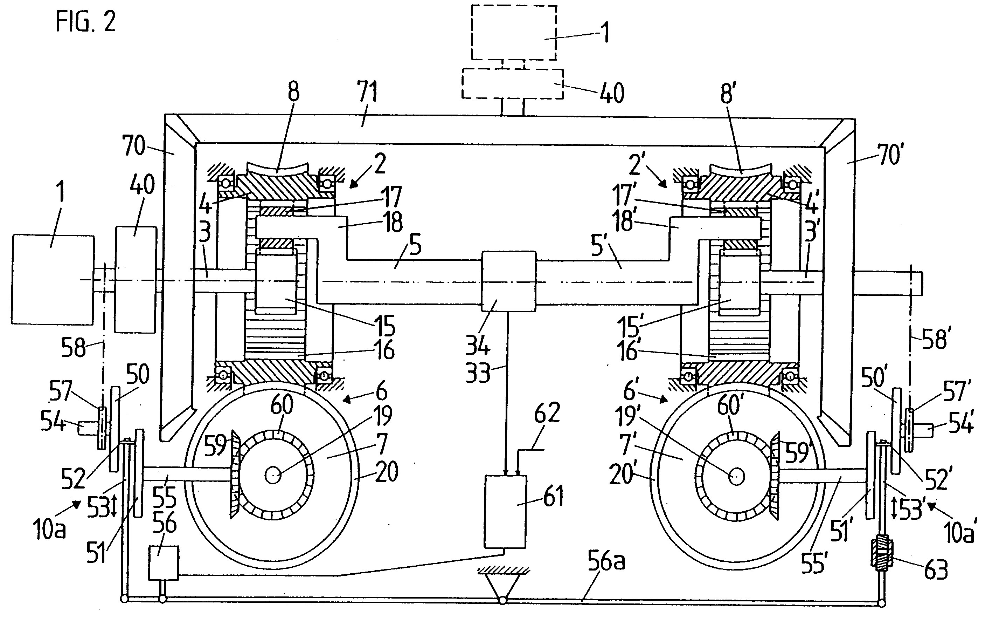

Bei der Ausführungsform nach Fig. 2 sind für gleiche Teile gleiche Bezugszeichen verwendet, so dass sich eine detaillierte Beschreibung der Getriebe 2, 2' und der Schneckengetriebe 6, 6' erübrigt. Die Drehzahlregelbaren Glieder 10a, 10a' sind hier als Reibradgetriebe ausgebildet, umfassend zwei parallele radial gegeneinander versetzte, drehbare Scheiben 50, 51; 50', 51' sowie ein Reibrad 52, 52'. Das Reibrad 52, 52' rollt auf den beiden Scheiben 50, 51; 50', 51' ab und ist auf einer Stange 53, 53' drehbar gelagert. Die Stangen 53, 53' sind senkrecht zu den beiden Wellen 54, 55; 54', 55' der Scheiben 50, 51; 50', 51' orientiert. Sie sind mittels eines gemeinsamen Hubelementes 56 längs ihrer Achse verschiebbar. Das Hubelement 56 wirkt auf einen doppelarmigen Hebel 56a, an dessen freien Enden die beiden Stangen 53, 53' angelenkt sind. Die Reibradgetriebe 10a, 10a' sind so ausgelegt, dass bei konstanter Drehzahl der Eingangswelle 3 die Summe der Drehzahlen der beiden Wellen 55, 55' konstant ist, unabhängig vom Hub des Hubelementes 56. Zur Justierung kann die Länge der Stange 53' mittels eines Einstellgliedes eingestellt werden, das in Fig. 2 symbolisch als Spannschloss 63 dargestellt ist.

Die Scheiben 50, 50' sind über je ein Zahnrad 57, 57' und einen Zahnriemen 58, 58' mit den Eingangswellen 3, 3' verbunden. Die Scheiben 51 sind über zwei Kegelräder 59, 60; 59', 60' mit den Wellen 19, 19' der Schnecken 7, 7' verbunden. Durch Verschieben der Stangen 53, 53' kann die Uebersetzung der Reibradgetriebe 10a, 10a' stufenlos geregelt werden. Im einfachsten Fall erfolgt die Verstellung der Stangen 53, 53' von Hand, wobei das Hubelement 56, z.B. eine Kurbel mit einer Mutter umfasst, in welche eine am Hebel 56a angelenkte Gewindestange eingreift. Im dargestellten Fall ist das Hubelement 56 hingegen ein elektrisch, hydraulisch oder pneumatisch betätigter Stellmotor, der von einem Regler 61 angesteuert ist. Der Regler 61 hat einen Sollwerteingang 62. Der Istwert 33 wird wiederum durch den Geber 34 geliefert, der den Winkel und/oder die Winkelgeschwindigkeit der Abtriebswelle 5 misst.

Auf den beiden Eingangswellen 3, 3' sitzt je ein Kegelrad 70, 70'. Die beiden Kegelräder 70, 70' kämmen mit einem weiteren, gemeinsamen Kegelrad 71. Durch diese Ausbildung haben die beiden Eingangswellen 3, 3' entgegengesetzt gleiche Drehzahlen. Der Antriebsmotor 1 kann auch mit dem Kegelrad 71 verbunden sein, was in Fig. 2 gestrichelt dargestellt ist.

Statt der Reibradgetriebe 50, 51, 52; 50', 51', 52' eignen sich auch andere stufenlos regelbare, mechanische Getriebe, z.B. Variatoren.

Im Betrieb arbeitet die Ausführungsform nach Fig. 2 analog jener nach Fig. 1. Auch hier wird über die stufenlosen Getriebe 10a, 10a' bloss eine sehr geringe Leistung übertragen, so dass diese leicht und preiswert hergestellt werden können und eine hohe Dynamik aufweisen. Der Motor 1 kann hier auch ein Verbrennungsmotor oder eine Dampf- oder Gasturbine sein. Auch bei der Ausführungsform nach Fig. 2 kann es zweckmässig sein, in den beiden Eingangswellen 3, 3' je einen Freilauf einzubauen analog der Ausführungsform nach Fig. 1.

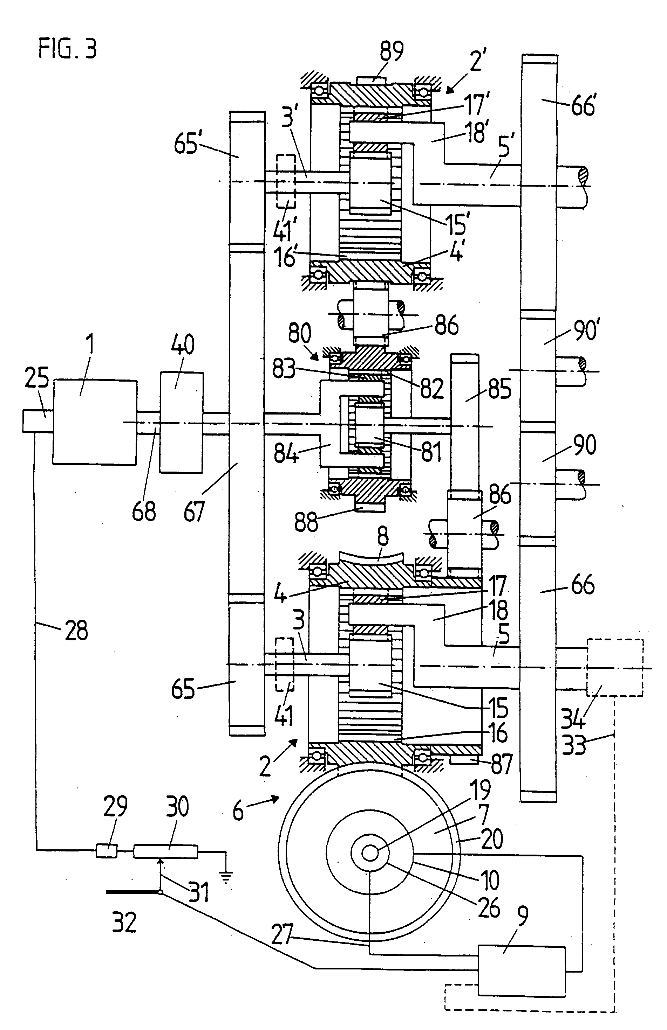

Die Ausführungsform nach Fig. 3 ist analog jener nach Fig. 1, wobei wiederum für gleiche Teile gleiche Bezugszeichen verwendet sind. Die Ausführungsform nach Fig. 3 unterscheidet sich von jener nach Fig. 1 dadurch, dass bloss ein einziges Schneckengetriebe 6 und ein einziger Servomotor 6 vorhanden sind und dass die beiden Eingangswellen 4, 4' über ein drittes Differentialgetriebe 80 miteinander verbunden sind. Das Differentialgetriebe 80 ist ebenfalls als Planetengetriebe ausgebildet mit einem Sonnenrad 81, einem Zahnkranz 82 und Planetenrädern 83, die auf einem Planetenträger 84 drehbar gelagert sind. Das Sonnenrad 81 ist mit einem koaxialen Zahnrad 85 verbunden, das über ein Zwischenrad 86 mit einem mit der Welle 4 verbundenen Zahnrad 87 kämmt. Der Zahnkranz 82 trägt ein Zahnrad 88, das über ein weiteres Zwischenrad 86 mit einem auf der Welle 4' sitzenden Zahnrad 89 kämmt. Der Planetenträger 84 ist starr mit der Motorenwelle 68 verbunden. Die Getriebeverhältnisse des Differentialgetriebes 80 und der Zahnradsätze 85, 87 sowie 88, 89 sind so ausgelegt, dass bei konstanter Drehzahl der Motorenwelle 68 die Summe der Drehzahlen der beiden Eingangswellen 4, 4' konstant ist. Auch hier können in den beiden Eingangswellen 3, 3' Freiläufe 41, 41' eingebaut sein. Die Zahnräder 66, 66' können direkt miteinander oder über eine gerade Anzahl von Zwischenrädern 90, 90' kämmen.

Auch bei der Ausführungsform nach Fig. 3 wird das Drehmoment von der Motorenwelle je nach Drehsinn des Abtriebsdrehmomentes auf der Abtriebswelle 5 entweder über das Differentialgetriebe 2 oder über das Differentialgetriebe 2' übertragen. Das Schneckengetriebe 6 ist in beiden Fällen im gleichen Sinn belastet und der Servomotor 10 wirkt in beiden Fällen bei gleicher Drehrichtung als Bremse. Durch das zusätzliche Differentialgetriebe 80 wird eine exakte Synchronisation der beiden Eingangswellen 4, 4' erreicht. Ausserdem wird die Regelung vereinfacht.

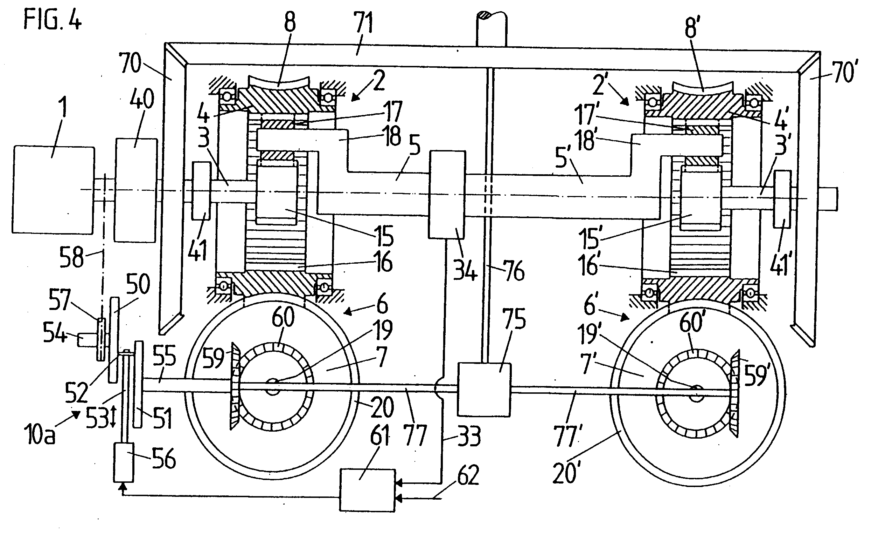

Die Ausführungsform nach Fig. 4 entspricht der Ausführungsform nach Fig. 2 mit dem Unterschied, dass das zweite drehzahlregelbare Glied 10a' weggelassen und durch ein zusätzliches Differentialgetriebe 75 ersetzt ist. Das Differentialgetriebe 75 kann z.B. entsprechend dem Hinterachs-Differential eines Automobils ausgebildet sein. Die Eingangswelle 76 des Differentialgetriebes 75 ist drehfest mit dem Kegelrad 71 verbunden. Die eine Ausgangswelle 77 ist starr mit dem Kegelrad 59, die andere Ausgangswelle 77' mit dem Kegelrad 59' verbunden. Auch bei dieser Ausführungsform ist bei konstanter Drehzahl des Antriebsmotors 1 die Summe der Drehzahlen der beiden Schnecken 7, 7' und damit der beiden Eingangswellen 4, 4' konstant.

Die Ausführungsform nach Fig. 4 hat gegenüber der Ausführungsform nach Fig. 3 den Vorteil, dass über das zusätzliche Differentialgetriebe 75 nur sehr kleine Drehmomente übertragen werden müssen und dass deshalb dieses zusätzliche Differentialgetriebe leicht und preiswert gebaut werden kann. Die Ausführungsform nach Fig. 3 hat demgegenüber den Vorteil, dass auch das zweite Schneckengetriebe 6' entfällt.

## Patentansprüche

1. Stufenlos regelbarer Antrieb umfassend einen Antriebsmotor (1), ein erstes Differentialgetriebe (2) mit einer ersten und einer zweiten Eingangswelle (3, 4) und einer ersten Abtriebswelle (5), ein erstes Schneckengetriebe (6) mit einer ersten Schnecke (7) und einem ersten Schneckenrad (8), sowie ein erstes drehzahlregelbares Glied (10), wobei der Antriebsmotor (1) mit der ersten Eingangswelle (3), das erste Schneckenrad mit der zweiten Eingangswelle (4) und die erste Schnecke (7) mit einer Ausgangswelle (19) des drehzahlregelbaren Gliedes (10) verbunden ist, dadurch gekennzeichnet, dass der Antrieb ein zweites Differentialgetriebe (2') mit einer dritten und vierten Eingangswelle (3', 4') und einer zweiten Abtriebswelle (5') umfasst, dass die zweite und vierte Eingangwelle (4, 4') derart angetrieben sind, dass bei konstanter Drehzahl der ersten und dritten Eingangswelle (3, 3') die Summe der Drehzahlen der zweiten und vierten Eingangswelle (4, 4') konstant ist, und dass die erste Abtriebswelle (5) drehfest mit der zweiten Abtriebswelle (5') derart gekoppelt ist, dass eines der beiden Differentialgetriebe (2, 2') ein Abtriebsdrehmoment auf der ersten Abtriebswelle (5) im einen Drehsinn und das andere Differentialgetriebe (2', 2) im entgegengesetzten Drehsinn bei gleichbleibender Drehrichtung und gleichbleibender Richtung eines Eingangsdrehmomentes auf die erste und dritte Eingangswelle (3, 3') überträgt.

2. Antrieb nach Anspruch 1, dadurch gekennzeichnet, dass die erste Eingangswelle (3) drehfest mit der dritten Eingangswelle (3') gekoppelt ist.

3. Antrieb nach Anspruch 1 oder 2, dadurch gekennzeichnet, dass er zusätzlich ein zweites Schneckengetriebe (6') mit einer zweiten Schnecke (7') und einem zweiten drehfest mit der vierten Eingangswelle (4') verbundenen Schneckenrad (8') umfasst.

4. Antrieb nach Anspruch 3, dadurch gekennzeichnet, dass die zweite Schnecke (7') mit einer Ausgangswelle (19') eines zweiten drehzahlregelbaren Gliedes (10') verbunden ist, wobei die beiden drehzahlregelbaren Glieder (10, 10') derart geregelt sind, dass bei konstanter Drehzahl der ersten Eingangswelle die Summe der Drehzahlen ihrer Ausgangswellen (19, 19') konstant ist.

5. Antrieb nach Anspruch 4, dadurch gekennzeichnet, dass die Summe der Drehzahlen der Ausgangswellen (19, 19') einstellbar ist.

6. Antrieb nach Anspruch 2, dadurch gekennzeichnet, dass der Antriebsmotor (1) mit einer Antriebswelle eines dritten Differentialgetriebes (80) verbunden ist, dessen eines Abtriebsglied (85) drehfest mit der zweiten Eingangswelle (4), und dessen anderes Abtriebsglied (88) drehfest mit der vierten Eingangswelle (4') verbunden ist.

7. Antrieb nach Anspruch 3, dadurch gekennzeichnet, dass der Antriebsmotor (1) mit einer Antriebswelle (76) eines dritten Differentialgetriebes (75) verbunden ist, dessen eines Abtriebsglied (77) mit der ersten Schnecke (7) und dessen anderes Abtriebsglied (77') mit der zweiten Schnecke (7') verbunden ist.

8. Antrieb nach einem der Ansprüche 1 bis 7, dadurch gekennzeichnet, dass das drehzahlregelbare Glied (10) ein Servomotor ist.

9. Antrieb nach Anspruch 8, dadurch gekennzeichnet, dass der Antriebsmotor (1) und der Servomotor (10) als Stoppmotoren ausgebildet sind.

10. Antrieb nach einem der Ansprüche 1 bis 9, dadurch gekennzeichnet, dass mit der Eingangswelle (3) ein Schwungrad gekoppelt ist.

## Claims

1. A continuously variable drive comprising a drive motor (1), a first differential gear (2) having a first and a second input shaft (3, 4) and a first driven shaft (5), a first worm gear (6) having a first worm (7) and a first worm wheel (8) as well as a first rotationally controllable element (10), the drive motor (1) being connected to the first input shaft (3), the first worm wheel being connected to the second input shaft (4) and the first worm (7) to an output shaft (19) of the rotationally-controllable element (10), characterised in that the drive comprises a second differential gear (2') having a third and fourth input shaft (3', 4') and a second driven shaft (5'), that the second and fourth input shaft (4, 4') is driven such that, if the rotational speed of the first and third input shaft (3, 3') is constant, the sum of the rotations of the second and fourth input shaft (4, 4') is constant, and that the first driven shaft (5) is rotationally fixedly connected to the second driven shaft (5') such that one of the two differential gears (2, 2') transmits a driven torque on the first driven shaft (5) in the one rotational direction, and the other differential gear (2, 2') in the other rotational direction, onto the first and third input shaft (3, 3'), while the rotational direction and the direction of an input torque remain the same.

2. A drive according to claim 1, characterised in that the first input shaft (3) is rotationally fixedly coupled to the third input shaft (3').

3. A drive according to either claim 1 or 2, characterised in that it additionally comprises a second worm gear (6') having a second worm (7') and a second worm wheel which is rotationally fixedly connected to the fourth input shaft (4').

4. A drive according to claim 3, characterised in that the second worm (7') is connected to an output shaft (19') of a second rotationally controllable element (10'), the two rotationally controllable elements (10, 10') being controlled such that, if the rotational speed of the first input shaft is constant, the sum of the rotations of the output shafts (19, 19') thereof is constant.

5. A drive according to claim 4, characterised in that the sum of the rotations of the output shafts (19, 19') is adjustable.

6. A drive according to claim 2, characterised in that the drive motor (1) is connected to a driving shaft of a third differential gear (80), the one driven member (85) of which is rotationally fixedly connected to the second input shaft (4) and the other driven member (88) of which is rotationally fixedly connected to the fourth input shaft (4').

7. A drive according to claim 3, characterised in that the drive motor (1) is connected to a driving shaft (76) of a third differential gear (75), the one driven member (77) of which is connected to the first worm (7) and the other driven member (77') of which is connected to the second worm (7')

8. A drive according to any one of claims 1 to 7, characterised in that the rotationally controllable element (10) is a servo motor.

9. A drive according to claim 8, characterised in that the drive motor (1) and the servo motor (10) are constructed as stop motors.

10. A drive according to any one of claims 1 to 9, characterised in that a flywheel is coupled to the input shaft (3).

## Revendications

1. Entraînement à réglage continu comprenant un moteur d'entraînement (1), un premier mécanisme différentiel (2) avec un premier et un second arbres d'entrée (3, 4) et un premier arbre de sortie (5), un premier engrenage à vis sans fin (6) avec une première vis sans fin (7) et une première roue hélicoïdale (8), ainsi qu'un premier organe de variation tachymétrique (10), le moteur d'entraînement (1) étant relié avec le premier arbre d'entrée (3), la première roue hélicoïdale avec le second arbre d'entrée (4) et la première vis sans fin (7) avec un arbre de sortie (19) de l'organe de variation tachymétrique (10), caractérisé en ce que l'entraînement comporte un second mécanisme différentiel (2') avec un troisième et un quatrième arbres d'entrée (3', 4') et un second arbre de sortie (5'), en ce que le deuxième et le quatrième arbres d'entrée (4, 4') sont entraînés de telle manière que pour un nombre de tours constant du premier et du troisième arbres d'entrée (3, 3') la somme des nombres de tours des deuxième et quatrième arbres d'entrée (4, 4') est constante, et en ce que le premier arbre de sortie (5) est accouplé de façon rigide en torsion avec le second arbre de sortie (5') en ce que l'un des deux mécanismes différentiels (2, 2') transmet un couple de rotation en sortie sur le premier arbre de sortie (5) dans un sens de rotation et l'autre mécanisme différentiel (2', 2) dans un sens de rotation opposé pour une direction de rotation constante et une direction constante d'un couple de rotation en sortie au premier et au troisième arbres d'entrée (3, 3').

2. Entraînement selon la revendication 1, caractérisé en ce que le premier arbre d'entrée (3) est accouplé de façon rigide en torsion avec le troisième arbre d'entrée (3').

3. Entraînement selon la revendication 1 ou 2, caractérisé en ce qu'il comprend de plus un second engrenage à vis sans fin (6') avec une seconde vis sans fin (7') et une seconde roue hélicoïdale (8') rigide en torsion raccordé au quatrième arbre d'entrée (4').

4. Entraînement selon la revendication 3, caractérisé en ce que la seconde vis sans fin (7') est raccordée à un arbre de sortie (19') d'un second organe de variation tachymétrique (10'), les deux organes de variation tachymétrique (10, 10') étant régulés de telle manière que pour un nombre de tours constant du premier arbre d'entrée, la somme des nombres de tours de leur arbre de sortie (19, 19') est constante.

5. Entraînement selon la revendication 4, caractérisé en ce que la somme des nombres de tours des arbres de sortie (19, 19') est réglable.

6. Entraînement selon la revendication 2, caractérisé en ce que le moteur d'entraînement (1) est raccordé à un arbre d'entraînement d'un troisième mécanisme différentiel (80) dont un organe de sortie (85) est raccordé rigide en rotation avec le second arbre d'entrée (4) et dont l'autre organe de sortie (88) est raccordé de façon rigide en rotation avec le quatrième arbre d'entrée (4').

7. Entraînement selon la revendication 3, caractérisé en ce que le moteur d'entraînement (1) est raccordé à un arbre d'entraînement (76) d'un troisième mécanisme différentiel (75) dont un organe de sortie (77) est raccordé à la première vis sans fin (7) et dont l'autre organe de sortie (77') est raccordé avec la deuxième vis sans fin (7').

8. Entraînement selon l'une des revendications 1 à 7, caractérisé en ce que l'organe de variation tachymétrique (10) est un servomoteur.

9. Entraînement selon la revendication 8, caractérisé en ce que le moteur d'entraînement (1) et le servomoteur (10) sont conçus comme moteur d'arrêt.

10. Entraînement selon l'une des revendications 1 à 9, caractérisé en ce qu'une roue de volant est raccordé à l'arbre d'entrée (3).
